(19) Europäisches Patentamt
European Patent Office
Office européen des brevets

(11) **EP 1 731 759 B1**

(12) **EUROPEAN PATENT SPECIFICATION**

(45) Date of publication and mention
of the grant of the patent:
**26.11.2014  Bulletin 2014/48**

(51) Int Cl.:
*F03D 5/00* (2006.01)     *F03D 5/02* (2006.01)
*F03D 11/04* (2006.01)

(21) Application number: **05107140.5**

(22) Date of filing: **02.08.2005**

(54) **Device for producing useful electricity from jetstreams**

Vorrichtung zur Energiegewinnung aus dem Jetstream

Dispositif pour la production d'énergie du jetstream

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **09.06.2005  US 148267**

(43) Date of publication of application:
**13.12.2006  Bulletin 2006/50**

(73) Proprietor: **Roseman, Yehuda
D.N. Shimshon (IL)**

(72) Inventor: **Roseman, Yehuda
D.N. Shimshon (IL)**

(74) Representative: **Handsome I.P. Ltd
3 Chapel Row
Queen Square
Bath, BA1 1HN (GB)**

(56) References cited:
WO-A1-92/20917         US-A- 4 470 563
US-A- 4 659 940         US-A1- 2002 033 019
US-A1- 2003 066 934

- OCKELS W ET AL: "The Laddermill: work in
  progress", 20040101, 1 January 2004
  (2004-01-01), pages 1-7, XP007920124,
- ROBERTS B W: "FLYING ELECTRIC
  GENERATOR TO HARNESS JETSTREAM
  ENERGY", PROCEEDINGS OF SPACE.
  INTERNATIONAL CONFERENCE AND
  EXPOSITION ONENGINEERING,
  CONSTRUCTION, OPERATIONS AND BUSINESS
  IN SPACE, XX, XX, 27 February 2000 (2000-02-27),
  pages 1020-1026, XP008034974,
- FLETCHER C A J ET AL: "Electricity generation
  from jet-stream winds", JOURNAL OF ENERGY,
  NEW YORK, NY, vol. 3, no. 3, 1 July 1979
  (1979-07-01), pages 241-249, XP008148010, ISSN:
  0146-0412, DOI: 10.2514/3.48003

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

In this patent request, a device is being described, one which is able to produce very cheap electric energy in immense quantities. The device is, in fact, a solution to the world's energy problem, because devices as such could work in all the large industrial countries: Japan, U.S.A., and all of Europe countries (and in most other countries too), and could supply quantities of energy, which are greater than the worldwide consumption. The device will produce only electricity, but because of its low price, it will be worthwhile to turn part of the produced electricity to chemical or other energy, which could be used as well as in moveable machines, such as automobiles. This electric energy, because of its low price, could also be used for additional purposes, such as desalination of seawater, and could also turn non-worthwhile industrial processes to rewarding ones. The energy produc0ed from the device will be clear of any pollution. Therefore, the use of this device will donate a crucial contribution to the solution of the pollution problem worldwide, which originates today, mostly, from use of soil oil as a central fuel substance. The device is sensitive to sabotage, but not more sensitive than that of other important devices existing in any country around the world, and it could be protected in absolute efficiency. The energy produced by the device is cheap and clear, as mentioned above, since its origin is the jet stream.

The jet streams are very fast winds, blowing at great height above the surface. In Israel, these winds are found at heights between 11 to 13 Km above the surface (air pressure of 200 mb) and in other parts of the world they exist in similar heights. These streams have been discovered already during the Second World War. However, the great height in which they blow, and the lack of a device such as the one discussed in this patent request - have prevented, until now, its utilization to produce useful energy for mankind. The only use made with the streams until now is in economizing of airplane fuel: the passenger plane's pilots, flying in trans-continental flights at great heights, enter into those winds with their planes, then fly above them, thus economizing in fuel usage. The thickness (upwards) of a typical jet stream is about 3 Km, its width is about 60 Km and its length is about hundreds or thousands of Km.

The average of the daily maximal speed of the jet streams is around 120 Km per hour above Israel, 240 Km/hour above Europe and the U.S.A. and 360 Km/hour above Japan. They reach a maximum of 200 Km/hour above Israel, 370 Km/hour above Europe and the U.S.A. and 550 Km/hour over Japan.

The significance of these speeds, in terms of power, concealed within them (from which - like any other power of any other wind - one can produce only about 60%) is clarified while observing the wind's power formula:

$$P = \frac{1}{2}mv^2 = \frac{1}{2}\rho v^3$$

P power in watts; m - mass of air in Kg passing, during one second, through a frame of a 1 m$^2$ frame in a standing position before the surface; v- wind's velocity in meter/second; - the wind's density in Kg/m$^3$. Even though the is about a quarter of its value at sea-surface height, this factor is of little importance versus the factor v$^3$. This formula also clarifies the ratio between the energy which can be produced from the jet streams and the energy which can be produced from the faint winds blowing upon the surface, which are being used today, partly, to produce energy. Since the wind's velocity is inconstant, the effective use of the produced energy from the device, mentioned in this request, will be by means of a large battery system. This system will be filled up from the energy produced by the device, and will sustain a power station, which will be operated by the stream supplied from it.

Examples of devices designed to utilize wind power at high altitudes are disclosed in: US 2003/066934 (Bolonkin); US 4,470,563 (Engelman); US 3,426,214 (O'Malley); US 3,924,827 (Lois); US 4,073,516 (Kling); US 4,084,102 and US 4,165,468 (Fry); US 4,450,364 (Benoit); US 4,166,596 (Mouton Jr. et al); US 4,309,006 (Biscomb); US 4,486,669 (Pugh); US 4,572,962 and US 4,659,940 (Shepard); US 4,708,592 (Krolick et al); US 5,152,458 (McConanchy); US 6,057,606 (Porat); US 6,474,595 (Herman); US 6.523.781 (Ragner); US 6,555,931 (Mizzi); US 6,781,254 (Roberts); US 7,183,663 (Roberts et al); US 7,275,719 (Olson); GB 489139 (van Gries); US 3,248,735 (Bartolini); US 3,620,486 (Charpentier); US 4,486,669 (Pugh); JP 04350369 (Taga Kiichi); and CN 2040167 (Haiquan Zhang).

The present invention provides a device for producing electricity from jet streams including at least one generator; and a sail line configured to collect the kinetic energy of the jet streams and connected to the at least one generator whereby the kinetic energy of the jet streams is converted to electrical energy. The device further includes a pipeline including a plurality of pipe bodies sequentially positioned above each other and attached one to the next, the pipe bodies being adapted to house a quantity of lighter than air gas, gas mixture or vacuum to thereby be capable to float in the air. The sail line is positioned at the top of the plurality of sequentially positioned pipe bodies. Aspects of the invention are set out in the accompanying claims.

The device consists of two main parts: a). A special pipeline, linking between the surface and the heights, in which the jet streams blow; b.) A sail line or a fan line, placed at the top of the pipelines, which operates generators for electricity production.

The description of the pipeline will be based on two models of this part of the device, which could be made in other models too. Following, accurate formulas will be shown, for calculating the dimensions of each part of the device. For the first presentation, we will take three specific models. The device parts are usually of very large dimensions, and in order to produce them, special facilities will have to be built. There is a great psychological difficulty, because of the innovation, but not a real problem, and it will not be difficult for the large industrial firms to produce these parts. (And if the pipelines will stand on high mountains, the pipeline will be able to be much shorter).

The pipeline in the models I have chosen to describe will be consisted of steel pipes, hardened, a little cone-like shaped, their broadening upwards. The models of the lower pipe sizes (its diameter determines the other pipes' diameter - the ones above it), assuming that it is at a sea surface, are: diameter - 2 meter and length 90 meter - according to one model and a diameter of 356 meter and length of 180 meter or diameter of 502 meter and length of 251 meter -according to a second model. (A device of a pipeline with a larger diameter can produce more energy, therefore it would be more profitable to make larger diameters) .

The lower pipe's thickness in the three models: 10 mm (due to safety request from a regular gun's bullet penetration, which will cause a gas leak from the pipe). The pipes will be filled with hydrogen or helium, its gas pressure in its lower part of the pipe will be equal to the outer air pressure at the same height. (There could also be a vacuum in the pipes, but that is a completely different model). The pipes will be closed at the upper part with a steel shell at a width of 1 mm, which will be arched outwards, its shape as a half ball or half paraboloid or other. In their lower part, the pipes will be closed with a shell, made of a light substance, which will not enable gasses to pass through it. (Such as strong material soaked in a plastic substance), and which could be folded and be peeled off. The degree of folding will be such, that when the pipe will be at its lowest possible point - such as the surface point, when the pipe is being laid out for repairing purposes - the material will not tear as a result of air pressure, but will expand from its enfolding, by entrance into the inner part of the pipe and with compressing the pipe's gas, until its pressure will reach the air pressure that exists at the height to which the pipe has been lowered. This way, there will also be no resistance of each pipe to its lowering (nor to its rising, because during the lifting, the expansion of the enfolding will be outwards) and it will be at an apathetic weight balance at any height. It will also prevent pressing (compressing) powers on the pipe's wall on any side, while declension during the device's operation, a pressure, which could bring to the pipe's wall to buckle.

The expansion of the pipe's diameter upward, will be made in such a manner, that the confined volume ratios in each section, at the length of 1 cm along the pipe, will be at an inverted ratio to the height density at the different heights, in which these sections exist normally. (When the device is operated). The calculation of the expanding angle will be presented hereinafter.

The thickness of the pipe's wall will decrease, until the weight of every cm of the pipe's length along the pipe will be even throughout the pipe's sections (and since the diameter has increased -the thickness should be decreased). (To each pipe, little supporting devices will be added, such as a clock for measuring the gas pressure in it, and also devices for measuring the wind's velocity, which will be placed on the upper pipes. Their weight will be negligible relative to the pipe's weight and there will be no need to consider these weights. Should it become evident, that the weight is not negligible -the length of the pipes, carrying these devices will be increased, respectively, so that each pipe's weight in the air will be equal to exactly 0).

At the beginning of the pipeline's designing, the advisable inclination angle will be determined, (relative to the perpendicular on the surface), in which the pipeline will incline during the operation. The angle will be determined according to the possibilities of evacuating a large area around the base of the pipelines from airplane flights, and according to the amount of desirable energy which could be produced from the device, according to the calculation hereinafter. (The energy produced from a device of a pipe with a given diameter - increases when the inclining angle increases). This angle may move, for instance, between 30 to 45 degrees. The pipeline could, at times, be more erect. (This will happen when a wind that is not strong enough will blow at the sail line area as will be described hereinafter), but will not be allowed to incline at a larger angle, since then, there will be a need to evacuate a larger area from the airplane flights. (It is obvious, that the direction of such an inclining could change, according to the jet stream direction, pushing the sail line, which could change a bit). According to the angle which has been determined for the pipelines, according to the lower pipe's weight - with all of its appliances, and according to the diameter determined for the lower pipe - the exact length of the lower pipe will be determined, so that the lift force on it will be exactly equal to its weight. The selection of the diameter for the lower pipe determines, as mentioned, the diameter of the pipes on top. There will be a need to determine the length of the pipes, separately for each pipe, since the weight of the upper shell, its thickness equal to all pipes, increases while increasing the diameter, and there is need, regarding each pipe, to reach a balance of the lift force with the pipe's weight. (The three sizes - which have been noted above - are not precise, and in pipes at the sizes mentioned, there is a lift force larger than their weight at a rate of hundreds or thousands of Kilograms).

The increase of the diameter and the decrease of the wall's thickness will be made with no consideration to the inclining of the pipeline during its operation. It will be made, though, as if the pipe is standing erect during its operation (therefore points 1 and 3 in drawing No. 1 will be of the same width, and not points 1 and 2). The reason for that is difficulty in production, and also a problem with the bulge of the upper shell, outside the pipe's dimension on top of it.

This will not alter the balance of each pipe section between its weight and its lift force on it, since the average on all the perimeter of the pipe in any of its height lines, will be suitable for calculation of the balance.

The pipes could be attached to each other all over their perimeters with steel cables. But a preferred model is a model in which the pipes will be attached to one another toughly, by screwing together or by welding. In this manner, the pipeline will be a fixed unit at a length of about 17 Km. In each attachment between the pipes, there will be a number of openings below the folded lower shell, which will be big enough for the entrance of a person and of necessary equipment, in order to perform repairs in the lower part of the pipe, which will be on or in the shell of the pipe below. These openings will also make contact with the outer air in order to create air-pressure at the bottom of each pipe, in order to create a different lift force on each pipe.

A fixed attachment, as mentioned, will also give protection to the round shell at the top of each pipe, from solids blowing in the wind, by chance or intentionally, since the shell will be completely in the space of the pipe above. (Except for the sections opposite the narrow openings for the entrance of a person and equipment).

We will now calculate a rough calculation, of the weight of each meter's length versus the lift force of the hydrogen in it. (We will assume that hydrogen is inserted in it - there is no danger in that. Certainly, there is no danger in the parts, which are at the upper kilometers of the pipeline, around which the air is thin, and where there is hardly any oxygen). We will calculate the lift force: the weight of a liter of air at the height of sea-surface is around 1.3 gr. Most of the air consists of the molecules $N_2$, their molecular weight is 28. (Because of the presence of oxygen -the air is even heavier. Water gases and traces of additional substances do not alter the weight considerably).

The molecular weight of the hydrogen molecule is about 2, therefore the weight per volume unit of the hydrogen is 1/14 from that of the nitrogen, therefore even less than 1/14 than the air weight at sea-surface height. (Should we decide to fill the pipes with helium, the ration will be 2/14, since the helium molecule, which consists of a single atom, weighs about 4 atom units). Should we subtract the hydrogen's weight (or the helium's) from the air's weight, we will receive 1.2 gr/liter (or 1.1 gr/liter). We will determine that the difference is 1 gr/liter. The result is that the lift force for each liter of pipe volume, existing in the air at the height of sea-surface is about 1 gr, which means 1 Kg for $m^3$ of pipe volume. The air volume in a meter of pipe length in the lower part of the lowest pipe (which we will assume - is at sea-surface height) is, regarding the example of the pipe, with a diameter of 356 m (we will choose as an example this pipe and not the pipe with 2m' diameter, since the latter is of a more complicated composition):

$$\pi \left(178\right)^2 = 99551 \ \mathrm{m}^3$$

Which means, that the upward force, donated by the volume of the lower meter of this pipe is 99.55 tons. Since the pipe's diameter increases with the height, at an inverted ratio to the height's density's decrease with the height, lift force for each meter of pipe length will be the same as the lower meter. The pipe's length is 180 m, therefore the lift force, because of all the lower pipe's volume is about 17,919 tons. (The hydrogen's pressure in each pipe, at its bottom, will be even to the air pressure outside, at a height of the bottom of this pipe. The pressure will be operated from inside onto the round shell, which is placed at the top of the pipe, since the weight of the outer air pole, at the length - from the bottom of the pipe to its upper part is bigger than the hydrogen pole at this length).

The weight of a meter of steel pipe length at the bottom part (and as mentioned above - the weight of each meter of pipe length equal to that), is:

$$35600_{\mathrm{cm}^2} \cdot \pi \cdot 100_{\mathrm{cm}} \cdot \rho_{\mathrm{gr/cm}^3} = \pi \cdot 3560000_{\mathrm{cm}^3} \cdot 7.8_{\mathrm{gr/cm}^3} = 87235668_{\mathrm{gr}} = 87.236_{\mathrm{Ton}}$$

Therefore, the weight of the whole pipe, its length 180 m, is about 15,703 tons. (The intersection's surface of the bottom of the shell at the top of each pipe, which actually holds the pipe in the air - by the gas pressure under it - is 356000 $\pi$ mm2 and it can hold a weight of:

$$356000 \, \pi \left(30\right)_{\mathrm{Kg}} = 33552180_{\mathrm{Kg}} = 33552_{\mathrm{Ton}}$$

Which is more than the multiplication of the pipe's weight, hanging on this lower part of the shell). The weight of the upper shell, assuming it is shaped as a half of a ball, therefore its surface is $2\pi \, r^2$ and its thickness of 1 mm is:

$$M = 2\pi (178)^2{}_{m^2} \cdot 10^4{}_{cm^2} \cdot (0.1)_{cm} \cdot (7.8)_{gr/cm^3} = 1552794900{}_{gr} = 1552.8{}_{Ton}$$

As a result, the total weight is about 17,256 tons, which is 663 tons less than the pipe's lift force. The weight and the lift force will be balanced, if we will add the weight of the additional devices, which will be attached to the pipe, and if we will also add the weight of the welding, or the weight of the bolts and the weight of the rings at the bottom and the top of the pipe, which will be used to attach the bolts (should the pipes be attached by bolts), or the weight of the steel cables and whatever is attached to them (should the pipes be attached by cables). Should these additional weights cause the increase of the pipe's weight beyond the lift force, there will be a need to lengthen the pipe a bit, since each meter of pipe length gives a profit of 12.315 power tons upwards. (We have not considered the lift force of the hydrogen in the round cap, since any cap, in the presented model, will be inserted in another pipe which is present on the top of this pipe).

A sketch of the two sequential pipes is shown in drawing No. 2 (in the drawing: 1 - the bottom shell, 2 - the top round shell, 3 - upper pipe, 4 - lower pipe).

The elasticity that each wall of pipeline perimeter at a diameter of 356 m can bear, according to a calculation of 30 $Kg_f$ / $mm^2$, is:

$$\pi (356)(1000)(10)(30) = 335521800{}_{Kg} = 335,522{}_{Ton}$$

(and that is the elasticity that any pipe in a pipeline can bear, since its section's area is equal to the section's area of the lower pipe).

This ability will remain unused, since in order to prevent an overmuch compression force on the pipe's wall, each pipe will carry only itself and will be at a neutral balance at each height. (A diameter of 2 m of a lower pipe will give permitted elasticity at:

$$\pi (1005^2 - 995^2)30 = 1884954{}_{Kg} = 1885{}_{Ton}$$

And a diameter of 502 m lower pipe will give permitted elasticity at:

$$\pi (502)(10^4)(30) = 473123450{}_{Kg} = 473,123{}_{Ton} \qquad )$$

The angle of the pipeline's inclining will be steady, since when there will be - at the sail line area - a fainter wind, the number of the working sails at the sail line will increase. That will be, in order to maintain the maximum produced energy possible for the inclining of the pipeline at the determined angle. The pipeline will be fixed to the ground with steel chains, which will be firmly inserted in cement tablets, stuck into the ground.

In order to minimize the wind's pressure on the pipeline, it is possible to encircle each pipe with a sail made of light substance, such as coated material (to make it resistant), which will be stretched on a light frame (as aluminium) and will turn freely. The sail could turn freely if it will be fixed on two rings that will be placed close to the top and the bottom of each sail, rings that will slide on two compatible rings, made of plastic material, of self-greasing character, and which will be attached to each pipe. The sail can look as described in drawing No. 3 (in the drawing: 1 - a pipe from the pipeline, 2 - the sail, *a* - any desirable measurement, $\varepsilon$ is any small number bigger than 0, it is advisable that it will be at least 1/10 of *a*).

In a sail made this way, the arrow will always be directed to the direction from which the wind has blown. The wind will come up against a slant. Its inclining angle will be 15° compared to the direction of the wind. The compressing power of the wind, when it comes up against a wall at such a slant, compared to the wind's power when it comes up against a wall which standing perpendicular to the direction of the wind is: $\sin^2 15°$. In such a case of 15°, it is 0.0669872. This should be multiplied by the triangle's base surface, formed by the arrow's head, which is: *2rl sin 75°·(a + a + ε)/a* (*l* - pipe's length, *r*- pipe's diameter). It is possible, that it is sufficient to make a sail with such an inclining angle - only in the high parts of the pipeline, in which an especially strong wind blows, and in some other parts to make a shorter sail, which will be of an inclining angle larger than 15°, and to even not make a sail at all in some parts of the pipeline.

In very long pipes, it is possible that it is best to make two separate sails, one on top of the other, or more, on each pipe, so that if the wind's direction at the different heights of the pipe will not be the exact same direction, the efficiency of the sail will not decrease. (in extreme cases, the sail could even break because of such pressure of the wind in different directions).

The detailing of reaching the result sin$^2\theta$, which is the ratio between the wind's force on the sail, inclining in a $\theta$ angle, in proportion to the wind's direction, and the wind's force on the sail, standing exactly towards the wind's direction is such - according to drawing No. 4 (in the drawing: 1 - the inclining sail, 2 - the wind's direction). We will name the wind's force on the surface at 1 m$^2$, standing towards the wind's direction - F. the perpendicular force operating on a wall inclining at a $\theta$ angle, towards the wind's direction will be F sine. The projection of F sine on the wind's direction is F sin$^2\theta$.

_The pressure on the upper round shell from inside, and the stress that is in it._

We will roughly calculate the pressure on the upper round shell and the stress formed in it, and we will find that it has no problem to handle it. First, we will calculate a primary calculation, in order to find the order of the size and then we will calculate a more precise and complicated calculation. If the length of all the pipes in the pipeline is equal - the difference of the pressures at the top of the pipe between the outer side and the inner side of the shell will be the highest in the lower pipe (because A: the pressure in the inner part on every chosen point is equal to the air pressure at the bottom of the pipe, minus the weight of the hydrogen pole beneath the pipe up to the height of the shell at that chosen point within the surface, which is inside the pipe. B: the proportions of the pressures between the places which are placed at steady height differences - are equal, and close to the surface, the air pressure is the highest). We will take, as a radical example, the length of the biggest pipe between the three examples shown above: 502 m. we will calculate the pressure for the central part of the round shell, a part, which is placed in the highest place. (The other parts of the shell are lower and the edges of the shell combine with the top of the pipe). The outer pressure at the center of the shell, is equal to the pressure at a height of 500 m above sea-surface. From literature we know that for the height difference of 500 m - the pressure proportion between the upper height and the lower height is 0.94. therefore if on the surface of the earth the pressure is about 1000 gr/cm$^2$ - then at height of 500m, the (outer) pressure is 940 gr/cm$^2$, which means 60 gr/cm$^2$ less. The pressure of the hydrogen pole is about 1/14 of 60 gr/cm$^2$ (for filling of helium: 2/14), which means it is 4.29 gr/cm$^2$ (for helium: 8.6 gr/cm$^2$). Therefore, the inner pressure in the upper part of the pipe is 995.71 gr/cm$^2$ (for helium: 991.4). Therefore, the pressure differences in the discussed place, between the inner and the outer sides is about 55.7 gr/cm$^2$, (for helium: 51.4).

According to the formula: $\sigma = rp/2t$ ( $\sigma$- the stress in the round shell in Kg/cm$^2$, $r$- the radius of the ball in meters, $p$ - the pressure in Kg/cm$^2$, $t$ - the width of the shell in meters). As a result: $r = 2t\sigma/p$.

If the substance, from which the round shell is made is steel, which is strong enough to hold a maximum stress of $\sigma$ = 3000 Kg/cm$^2$, we will receive:

$$r = 2\left(10^{-3}\right)\cdot\left(3000\right)/0.0557 = 6/0.0557 = 107.7\,\mathrm{m}$$

It therefore seems, that a round shell, at a width of 1 mm, is limited in the lower pipe to a diameter of 215 m. (In upper pipes, the pressure difference between the inner side and the outer side of the shell will be smaller and will decrease, together with the height). But

since the pressure difference of 55.7 gr/cm$^2$ exists only at the highest point of the round shell, one should calculate a more complicated calculation, in order to find the permitted maximal radius. (however if we look again, we see that the detailed next explanation is unnecessary, because if the radius of the round shell is about 250m, the highest point of the round shell will be at a height of 750m, and therefore the outside pressure will be much lower and the differences in pressure will be much greater than 0.0557 Kg/cm$^2$. Thus allowing the possible r to be much bigger.).

We will observe the intersection of the shell, while observing the pipeline on its profile. (drawing No. 5). We shall find the pressure at each point on the round shell. The pressure in each point is according to the point's height, which means according to the distance between the point on the half-circle perimeter, in drawing No. 5 and the point beneath it on the line a-a in the drawing. This distance is $r\cdot\cos\theta_p$. Assuming that the temperature is steady along the whole pipe, this pressure for each point on the perimeter, compatible to the radius at a angle $\theta$ ($\equiv \theta_p$ ) is:

$$1.3_{\frac{\mathrm{Kg_F}}{\mathrm{m}^3}}\int_0^{r\cos\theta} e^{\frac{-mgh}{KT}}\,dh - \left(1.3\right)\left(\frac{1}{14}\right)\int_0^{r\cos\theta} e^{\frac{1}{14}\frac{mgh}{KT}}\,dh =$$

While "$m$" is the nitrogen molecule mass (which is approximately an average molecule mass of the air), "$h$" is the height from the a-a line, "$g$" is gravity's acceleration, "$k$" is a Boltzmann constant and "$T$" is the temperature in Kelvin degrees.

$$= \left[-(1.3)KT/(9.8)m\right]e^{\frac{-9.8mh}{KT}}\Big]_0^{r\cos\theta} - \left[-1.3\left(\frac{1}{14}\right)\frac{KT}{\left(\frac{1}{14}\right)9.8m}\cdot e^{\frac{-\left(\frac{1}{14}\right)9.8mh}{KT}}\right]_0^{r\cos\theta} =$$

$$= \frac{1.3KT}{9.8m}\left(-e^{\frac{-9.8mr\cos\theta}{KT}} + e^{\frac{-\left(\frac{1}{14}\right)9.8mr\cos\theta}{KT}}\right) \equiv F$$

This is the difference between the air and hydrogen poles' weight of an intersection of 1 m$^2$, for a pole, that its upper edge in the ball reaches to a point at the angle $\theta$, and therefore this is the lift force for this m$^2$ inside the ball's volume. This is the value at one point for this angle $\theta$.

An integral should be calculated on each value as such, for every shell's belt that is parallel to the bottom of the shell, a belt, which is wholly at the angle $\theta$. Which means, that an integral should be calculated on $\int_0^{2\pi} F \cdot r \sin\theta d\varphi$, and its result would be: $2\pi F \sin\theta$. Finally, for each result we have accomplished until now, we should calculate an integral from 0 to $r\frac{\pi}{2}$, for the whole arch of the ball (which is for all the $\theta$ angles).

We will reach: $T_0 \equiv 2\pi\, r \int_0^{\frac{\pi}{2}} F\sin\theta \cdot rd\theta \equiv$ the total lift force on the half-ball.

$$= 2\pi\, r^2 \frac{1.3KT}{9.8m} \int_0^{\frac{\pi}{2}} \left( -e^{\frac{-9.8mr\cos\theta}{KT}} + e^{\frac{-\left(\frac{m}{14}\right)9.8r\cos\theta}{KT}} \right) \sin\theta\, d\theta =$$

We will place: $x = \cos\theta \Rightarrow \dfrac{dx}{d\theta} = -\sin\theta \Rightarrow d\theta = -\dfrac{dx}{\sin\theta}$

$$= 2\pi\, r^2 \frac{1.3KT}{9.8m} \int_0^1 -e^{\frac{-9.8mrx}{KT}} + e^{\frac{-\frac{m}{14}\cdot 9.8rx}{KT}}\, dx =$$

We will determine: $\alpha \equiv \dfrac{9.8mr}{KT}$, $\beta \equiv \dfrac{\frac{m}{14}9.8r}{KT}$, $c \equiv \dfrac{2\pi\, r^2(1.3)KT}{9.8m}$,

$$= c\int_0^1 -e^{-\alpha x} + e^{-\beta x}dx = \frac{c}{\alpha}e^{-\alpha x}\Big|_0^1 - \frac{c}{\beta}e^{-\beta x}\Big|_0^1 =$$

$$= \frac{c}{\alpha}\left(e^{-\alpha}-1\right) - \frac{c}{\beta}\left(e^{-\beta}-1\right) = \frac{2.6\pi rK^2T^2}{(9.8)^2 m^2}\left(e^{\frac{-9.8mr}{KT}}-1\right) - \frac{(14)2.6\pi rK^2T^2}{(9.8)^2 m^2}\cdot$$

$$\cdot\left(e^{\frac{-9.8mr}{14KT}}-1\right) =$$

We will place: $m = 28\cdot(1.66053)\cdot 10^{-27}$ Kg $= 4.649484\cdot 10^{-26}$ Kg,

$T$(average in the lowest shell)$= 291°$K, K$=1.38062\bullet 10^{-23}$J/°K, $r=$ 291 m (extreme case)

$$= 159413.78\cdot 10^6\left(e^{-28.466716\cdot 10^{-3}}-1\right) - 2231792.9\cdot 10^6\left(e^{-2.0333368\cdot 10^{-3}}-1\right) =$$

$$= 159413.78\cdot 10^6(0.9719346-1) - 2231792.9\cdot 10^6(0.9979687-1) =$$

$$= -447401.15\cdot 10^4 + 453344.09\cdot 10^4 = 5942.94\ \cdot 10^4 \mathrm{Kg_F} = 59.429\,\mathrm{ton} \equiv T_0$$

In order to determine the width of the round shell, the next formula should be calculated. It determines the minimal width, at the place where the shell and the pipe combine: $T_0 = 2\pi r\sigma d$

In which "$d$" is the width of the shell.

As a result:

$$d = T_0 / 2\pi\, r \cdot 3000 = 5942.94\cdot 10^4 / 2\pi \cdot 251\cdot 10^2 \cdot 3000 =$$

$$= 1.256\cdot 10^{-1}\mathrm{cm} = 1.256\,\mathrm{mm}$$

Because of the pressure form, the half ball will tend to have a shape of a paraboloid. But since the pressure differences at the different places are not very big, the round form will be retained almost completely.

If we place the general term of To, in order to find the required "*d*" in any case, we will receive:

$$d = 2.6\pi \, rK^2 T^2 / (9.8)^2 m^2 \cdot 2\pi \, r \cdot 3000 \cdot 10^4 \cdot$$
$$\cdot \left[ \left( e^{-9.8mr/KT} - 1 \right) - 14 \left( e^{-9.8mr/14KT} - 1 \right) \right] =$$

When we place the "*T*", "*k*", "*m*" values:

$$= 3.3689513 \left( 13 + e^{-1.1341322 \cdot 10^4 \cdot r} - 14 e^{-8.1009443 \cdot 10^6 \cdot r} \right)$$

We will place *r* values and will receive the compatible "*d*" values:

| *r* [m] | *d* [mm] |
|---|---|
| 50 | 0.0499 |
| 100 | 0.198 |
| 150 | 0.4 |
| 200 | 0.796 |
| 224 | 1.0003 |
| 251 | 1.25 |
| 300 | 1.79 |
| 350 | 2.43 |

As a result, up to a radius of 224 m (at the given temperature), thickness of 1 mm is enough for the round shell. In the manner calculated here, one should calculate for each height (which determines the "*T*") the radius for which the width of 1 mm is sufficient for the shell. According to the critical constraint, the maximal possible radius will be determined (since, as mentioned, the radius should increase together with the increase of the height) for the bottom pipe. It is also possible to make the upper shell parabolic and even more parabolic than required.

Calculation of the pipeline's cone

We will calculate the pipeline's cone-like shape, that is the angle $\alpha$ of the cone in drawing No. 6, a drawing describing the pipe's section. We will calculate, assuming that the pipeline's inclining angle, during operating time had been determined to 30°. Under this assumption, the pipe's length, up to 1 km height above the surface will be:

$$1/\cos 30° = 2\sqrt{3} = 1.1547005$$

At the height of 1 km, the air's density is 0.9, relatively to its density on the surface. We shall find what should be the radius $r_2$ of a cylinder, its length is 1 meter, which is placed at a height of 1 km, so that the air's weight in it will be equal to the air's weight, existing in the cylinder its radius is $r_1$, and its length is 1 meter, that is placed on the surface (therefore, the same lift force will exist on both cylinders).

We will indicate:

$\rho_1$ - air's density on the surface
$\rho_2$ - air's density at the height of 1 km

According to the requirement:

$$\pi \, r_1^2 \rho_1 = \pi \, r_2^2 \rho_2$$
$$\rho_1 / \rho_2 = \left( r_2 / r_1 \right)^2$$

$$r_2 / r_1 = \sqrt{\rho_1 / \rho_2} = \sqrt{1/0.9} = 1.0540926$$

It is resulted, that at a length of 1.1547005 km of the pipeline's axis, the radius increases in 0.0540926 $r_1$ km. In a case that: $r_1$=224 m = 0.224 Km

We will get:

$$\mathrm{tg}\alpha = 0.0121167 / 1.1547005 = 0.0104933 \Rightarrow \alpha = 0.6012°$$

<u>Appliances for control of pipe pressure, and its adjustment and the possibilities of repairing the device</u>

To each pipe, there must be attached (directly or indirectly) a means of measuring the gas pressure in it and also a means (a little pipe) of insertion and extraction of the gas at any time. It is predicted, that there will be repairs, resulting in cessation of the device operating, and that there will be repairings that could be made during the device's operating. (the extraction of gas from one or more pipes can be done without disturbing its functioning, since the force, stretching the pipeline, supplied by the upper containers - mentioned below - should be strong enough in order to bear the additional loading, and to maintain the pipeline in a not too big inclining angle, in cases in which the blowing winds are not too strong). For that reason, to each pipe from the pipeline, little pipes should be attached in order to insert and extract the gas. These little pipes should be attached to a particular center, or various centers around the bottom of the pipelines. It is preferable, that all little pipes should be scattered within the pipeline's perimeter, so that the tearing of the little pipes in one area will not affect the others, thus endangering the system's functioning. It is possible, that because of such danger, it is best not to attach these little pipes to the system at all, and in time of need, each pipe will be filled separately and especially through the opening to which the appliance for pressure measurement is attached.

<u>Protection from lightning</u>

If the pipeline will not be coated from the outside with a plastic layer, thick enough to prevent lightning transition -there will be need to attach to it a cable. The cable must have high conductivity, greater than that of the pipeline's (which will be attached, for instance, above the attachment between the lower pipe's section and the one above it, while at the attachment between these pipe sections, insulators will be inserted). It will be done, in order to remove the lightnings that will be caught at the pipelines - should it be clarified that these lightnings disturb the functioning of the system. There is also a possibility to use the energy of these lightnings, which will be drained in a different place, through the mentioned cable.

The pipeline does not have to be made of steel and could also be made of compound substances, their specific gravity much lighter than that of steel. A conductive cable will be accompanied to the pipeline (one or more, divided symmetrically around the pipeline and joined to it by an insulated substance). The cable will be the second pole, through which the electricity will flow from the generators at the top of the pipes (or if the pipeline will be fully made of a substance, which is not conductive, the cables will be used for both poles).

As mentioned above, the described pipeline is only one of the possibilities. An additional possibility is described in drawings No. 7 and 8. the shape described in drawing No. 7 is based on the shape described up till now (shown also in drawing No. 2) to which was added a cone-shaped film, starting at the bottom of the pipe and reaches the height 1 , from there it is attached with a film of a circled intersection to the upper edge of the pipe. (because the gas's low specific gravity -this shape will remain almost circular and will not become parabolic). (in drawing No. 7: 1 - a hole for equalization of the air pressure during the change in the pipe's height). Drawing No. 8 is an above view of the object in drawing No. 7. In this model too, each pipe is blocked at its bottom part with a flexible and folded barrier, which prevents the passage of the gases, as described above. The model in drawing No. 7 could be made also without sails to reduce wind's pressure, since its shape will minimize the wind's pressure on the pipe. The wind's pressure on a plain surface, at an angle of $\alpha$, towards the wind's direction (drawing No. 9. In drawing: 1 - wind's direction, 2 - the surface) is as mentioned above, relative to $\sin^2\alpha$. If the surface, at some point, inclines also at a $\beta$ angle around the a-a axis, then the wind's pressure on the surface will be relative to $\sin^2\alpha \sin^2\beta$.

<u>General calculation of the pipe sizes</u>

In order for each pipe, of any model, to float in the air, it must be seen to it, that the lift force on it due to the specific gravity difference between the hydrogen (or helium) and the air should be greater than its weight. For a pipe from the described model in drawing No. 2, one should find the 1 values (pipe's length in meters) and r values (the pipe's diameter, in meters) (when the calculation is made according to the lowest pipe, existing, for instance, at a seasurface height), for which the next formula accepts negative values. (There will be a need to examine the diameter, should there be a demand to choose the largest possible diameter, according to the most constrained pipe section along the pipeline, for which an upper shell of a thickness of 1 mm is sufficient. We have chosen the pipe's and shell's width of 10 mm and 1 mm respectively. We can, of course, determine for them different values, and accordingly to alter the next formula. We take the substance's density, from which the pipe is made as 8 gr/cm$^3$, that too can change according to the substance we chose). That is that we have to make sure that:

```
Converting      thickness    density   Converting       thickness     volume
meters² to                             meters² to
centimeters²                           centimeters²

2πrl  (10000)  (1)  8 + 2πr²  (10000)  (0.1)  8 - πr²l  (1000)  <  0
```

The expression on the left side gives the balanced force in grams, which operates on each pipe. The result in Kg will be:

$$\pi \ (160rl + 16r^2 - r^2l) < 0 \ \text{Kg}$$

I have not considered here the weight of additional devices, which are fixed on the pipe, since their weight is negligible and since it is also being compensated by the additional 100 gr per m$^3$, that had been neglected in calculating the lift force. I have not considered the hydrogen's lift force of the round shell, since this hydrogen's volume is being included in the hydrogen's volume of the pipe on top of the discussed pipe (and there will be need to consider this volume only in the calculation of the upper pipe's section of the pipeline). We shall now calculate the additions of the weight and of the lift force, that should be taken into consideration, for the second model which has been displayed, that is described in drawing No. 7, the marking - according to drawings No. 10 and 7.

The cone-shaped shell's weight (the thickness of all the additional shells: 1 mm):

$$(0.1)(8)(10)\int_{h1}^{h2} 2\pi \, h \, tg\alpha \, dh / \cos\alpha =$$

$$= (8)2\pi \left(tg\alpha / \cos\alpha\right)\int_{h1}^{h2} h \, dh = 16\pi \frac{tg\alpha}{\cos\alpha}\left(\frac{h_2^2}{2} - \frac{h_1^2}{2}\right) =$$

$$= 8\pi \frac{tg\alpha}{\cos\alpha}(h_2 + h_1)(h_2 - h_1) = \frac{8\pi}{\cos\alpha}(r_2 + r_1)(h_2 - h_1) =$$

$$= 8\pi (r_2 + r_1)\sqrt{(h_2 - h_1)^2 + (r_2 - r_1)^2} = \sqrt{5}\,8\pi\left(rl + \frac{l^2}{4}\right)\text{Kg}$$

(the factor 0.1 at the beginning of the formula is the cone-shaped shell's thickness in cm. The factor 8 is the weight of 1 cm$^3$ of the substance, in grams. The factor 10 is what is left of the product in (100)$^2$ because the "$h$" and the "$dh$" are taken in meters and the division in 1000 in order to receive the weight's result in kg and not in gr.).

The weight of the shell with the half circular intersection is (I will show here the final formula directly, without calculating):

$$\frac{\pi^2}{2}\left(2r+\frac{l}{2}\right)\left(\frac{l}{2}\right)\cdot 10000\cdot(0.1)\cdot 8\frac{1}{1000}=4\pi^2\left(2r+\frac{l}{2}\right)\frac{l}{2}\,\mathrm{Kg}$$

The volume of the cone-shaped part is (in m$^3$ ):

$$V=\frac{1}{3}\pi\,l\left[\left(r+\frac{l}{2}\right)^2+r^2+r\left(r+\frac{l}{2}\right)\right]=\pi\,l\left(r^2+rl+\frac{l^2}{12}\right)$$

The volume of the half-circular part in m$^3$ is:

$$V=\frac{\pi^2}{8}\left(2r+\frac{l}{2}\right)\left(\frac{l}{2}\right)^2=\frac{\pi^2}{16}\left(rl^2+\frac{l^3}{4}\right)$$

The volume of the pipe, existing inside the cone, is: $2\pi rl(0.01)$m$^3$ and it is subtracted from the cone's volume. We shall not neglect it, in spite of its little size. The lift force on each m$^3$ of volume is about 1 kg, therefore the lift force for each pipe section will be:

$$F_{\mathrm{lift}}=\pi\,l\left(r^2+\frac{rl}{2}+\frac{l^2}{12}\right)+\frac{\pi^2}{16}\left(rl^2+\frac{l^3}{4}\right)-2\pi\,rl(0.01)\mathrm{Kg}$$

And the formula, which should exist, regarding each pipe-section, in order for it to float in the air is:

$$\pi\left[\sqrt{5}\cdot 8\left(rl+\frac{l^2}{4}\right)+4\pi\left(2r+\frac{l}{2}\right)\frac{l}{2}+160\,rl+\right.$$
$$\left.+16\,r^2-l\left(r^2+\frac{rl}{2}+\frac{l^2}{12}\right)-\frac{\pi}{16}\left(rl^2+\frac{l^3}{4}\right)+2rl(0.01)\right]<0\,\mathrm{Kg}$$

If we wish to assemble terms, we should get the formula:

$$\pi\left[rl\left(\sqrt{5}\cdot 8+4\pi+160+0.02\right)+l^2\left(2\sqrt{5}+\pi\right)+\right.$$
$$\left.+r^2(16-l)-rl^2\left(\frac{1}{2}+\frac{\pi}{16}\right)-\frac{l^3}{4}\left(\frac{1}{3}+\frac{\pi}{16}\right)\right]<0$$

As aforesaid, we have made calculations regarding the lower pipe section and it should be right also for the rest of the pipe sections, since the proportion between the pipe's weight and the lift force on it due to its volume - will be equal to that of the lower pipe. But that is true only regarding the body of the pipe and not regarding all the shells, since their thickness stays steady: 1 mm, and the increase of their volume causes increase of their weight. (it is true regarding both types of pipes presented, in which there is at least one shell). This problem can be solved by making the shells of the pipes above the lower pipe, partially or fully, from compound substances, their specific gravity being 1/4 or less than the specific gravity of steel (and there is a compound substance, its specific gravity - 1.65 gr/cm$^3$ ). Hereinafter, we shall present a table of computer results, regarding both pipe types, and one could get a clear idea of the possible diameter and length of the lower pipe section in these types.

The upper pipe section should be made in a manner, that no shell will bulge from its upper edge in a way that will stop the blowing wind towards the other part of the device, which is the sail line. One possibility to do so is that the upper pipe will basically be like the other pipes, only that in this pipe, the pipe's wall will continue up to the height in which the peak of the round shell is arrived. On the upper part of this continuation of the pipe, the pipe's wall will be thickened a bit, and a huge bearing will be attached, as described in drawing No. 11 (1 - continuation of the pipe's wall, 2 - the bearing).

It seems to me, that it is best to make it, for long shelf life - sake, as a friction bearing, only between its two parts, a plastic substance should be found, one of a self greasing character, which will minimize the fiction. (if possible, it is advisable to make all the parts, assembling the bearing and the sail line from compound substances, of low specific gravity).

A few poles, shaped aerodynamically, will emerge from that part of the bearing, which is not connected to the upper pipe, in such a way, that they will not seriously disturb the wind, and will be of a total area intersection equal to the area intersection of each pipe from the pipeline.

The sail line will be connected to these poles. (The pipeline described up till now has additional devices, attached to it, which will be mentioned later, during the explanation of the system's operating).

In the largest model of the pipelines, where the diameter at the part that is close to the ground is 502 m, and the diameter at its upper edge is about 1004 m, it is possible to make the aerodynamic poles, as mentioned above, at a length of 502 m. The upper edges of these poles will be attached to huge closed shells (their thickness, for instance, being 1 mm) cone shaped or flat, but with an edge, (therefore - aerodynamic), filled with hydrogen. The purpose would be to stretch the pipeline upwards and prevent it from inclining at a large angle because of the wind pressure on the sails that are at the sail line.

The attachment of these shells to the pipeline could be by means of many steel strings, their general intersection area being as such, that the maximal force upwards, which can pass through them, will be equal to the maximal force upwards, which can pass through any pipe from the pipeline during its inclining. The exact calculation of their volume will be presented herein after calculating the wind's pressure's size on the sail line. The closed shells will look as described in drawing No. 12 (in the drawing: 1 - the intersection in a cone shell case, 2 - the intersection in a flat shell case). The angle 30 is not a must. As the angle decreases -the wind's pressure on the closed shell will also decrease. The closed shells should be attached to the aerodynamic poles, in a way that they will not reach each other and will not collide with each other. Should it be impossible to reach this requirement, a single closed shell will be made.

A frame will be attached to the aerodynamic poles, which are placed above the bearing. The frame will be of a few kilometers' length and at the same height as the aerodynamic poles (the exact sizes of the frame will be determined, according to the wind's pressure, which determines the stretching degree that should be done, by the closed shells, in order for the pipelines not to incline more than had been determined. This stretching should not cause any stretching that exceeds the allowed stretching of the pipeline, which is determined according to the size of the intersection of the pipeline). Closed shells, filled with hydrogen will be attached to this frame too. They will be attached, for instance, at its upper side, throughout its length, and at its two sides too. They will bear the weight of the frame and whatever is attached to it (it is preferable, that at the bottom there will be no shell, so that the frame's vertical poles, will bear stretch force, not pressing force which causes a collapsing danger). These shells too will have an edge towards the wind's direction. The upper one - with an inclination downward, like the example of the shell, described in drawing No. 12. The ones on the sides will incline toward the frame or toward the frame and downward - together.

Chains, carrying the sails are connected to this frame, by bearings. The sails, each shaped as a rectangle, are directed so, that the wind will blow and move them. They are constantly in motion as follows, and the whole sail system moves in a cyclic track. They are attached in such a manner, that when they move in the wind direction, they stand perpendicular, to the wind's direction and when they return - they are parallel to the wind's direction. The chains carrying the sails will be, for instance, on both sides of the sail line. On each side there will be 2 chains. The chains will bear each sail by two poles, connected to the sail at an equal distance above and under the height of the sail's center, as shown in drawing No. 13. At the end of the sail's track, along the sail line, on the farthest side from the wind's direction, the chains, carrying the upper pole will go downward. Since the chains that are holding the lower pole are still at a steady height (on suitable wheels), the sail turns and becomes horizontal. The two pairs of chains then go downward, parallely, under the working sails' level, which move in the wind direction, in order for the sail to return to the front of the sail line. In this manner, the sail moves back, with the aid of the chains, under the sail line, until it reaches the beginning of the sail line, where the upper pole rises a lot and the lower pole rises a bit. (both pairs of chains, should make an equal way in length, since both pairs move throughout the circle at the same average speed). So the sail moves until its face will be directed to the direction from which the wind comes, and then it enters the additional chains' system, as hereafter which are pushed by bolts that connected to every sail and move the generators. The track of the chains holding and declining the sails, is described in drawing No. 14. The wheels holding the chains are attached to the frame on top, or at the bottom, or on the sides - there are many possibilities - so that the chains will not collide with each other. The sails will be attached to the chain, one after the other, at constant space.

The additional chains mentioned, will be exactly at the height of the upper edge and of the lower edge of the sails, while being erect. The sails will move these chains, by pushing them by bolted poles which are above and under each sail. The sail with the bolts is described in drawing No. 15. These chains (which we will call "the working chains"), those at the top and at the bottom on every side of the sail (left side and right side) will be connected to each other, by a set of cogs (attached to the frame), so that both will move at the exact same speed. This set of cogs will prevent the sail from not being vertical toward the wind, since the wind's force will not be divided, at times, equally on all the sail. At some places, generators are attached to these chains. These generators are the ones, creating the electricity, for which the whole device is being built. These generators too, are attached to the frame, and if needed - additional hollow shells, bearing the weight of these parts, are attached, adequately, by bearings. (The first chains, holding the sails and inclining them - their lower part, which returns the sails to the beginning of the sail line - is under the working chains, otherwise they will collide with the working chains). The working chains, which are above and under the sails, draw away from each other at the end of the sail line, so that the poles emerging from above and under the sail, will no longer touch and will not push these chains. This enables the first chains, carrying the sails, to turn the sails to the direction parallel to the ground, in order to return them to the beginning of the sail line, without coming up against the wind's resistance.

The working chains are made of long and wide links, as described in drawing No. 16, which is an above view of a link, belonging to a chain of the upper side of the sails. The drawing describes the view of the moment the sail begins to work, in other words, the minute the sails straightens erectly toward the wind, and the bolts enter the link. At the same moment, there is still a certain distance between the bolts (1), and the pole inside the link (2), on which the bolts will press, and this pressure, will help the movement of the chain. A moment after that, because of the wind's pressure, the sail is being pushed to this pole. This pushing is made possible, since the sails are attached to the first chains, which hold the sails and move them in their course, by weak springs (we did not mention them before). The purpose of the existence of the weak springs is that all sails at the sail line will reach and press equally on the working chains, which move the generators. The way the sail is attached to the first chains, by the springs, is described in drawing No. 17. (in the drawing: 1 - the sail at a profile, 2 - the first type chains, which hold the sail and move it in its steady course, 3 - the weak spring, 4 - carrier for the spring). (note: the frame is much larger than the sails, and includes the whole volume which all the chains and generators are in it. The reinforcements are, of course, only on the outer areas, outside the volume in which the sails move). An engine is attached to one of the chains (one or more), nourished, for instance from a battery. The role of this engine is to accelerate or decelerate (according to the matter) the movement of the chains, which move the generators, so that the speed of these chains, therefore the velocity of the sails' movement, shall always be 1/3 of the wind's velocity. That is because, at a speed as such, the sails receive the maximal wind energy that can be received. I describe the sails as huge ones. Certainly, it is possible to make a number of smaller sail systems, instead of one large system. These small systems could be inserted in the large frame, one on top of the other, each with the chain suitable for it. I will continue describing the possibility of only one sail system, for convenience purposes of the description. (each sail will be made with large windows - in case it will be clarified, that a continuous sail affects to weaken the jet stream's speed in the sail area). In order for the sails' velocity to be 1/3 than the wind's velocity, somewhere on the frame, a wind's velocity measure will be placed, which will be connected to the engine(s) that accelerates or decelerates the chains attached to the generators. This engine will be attached to the chains by a device working as an automatic - gear device. It is advisable, that there will also be, in addition to this wind velocity's measure, more velocity measures along the sails' height, which will provide data to a computer, that will determine the weighted average of the third power of the wind's speed, times the surface in which the wind blows in this speed. The required speed of the sails' movement will be determined as equal to this weighted average.

Also, along the upper kilometers of the pipelines, there will be scattered appliances, that will measure the wind's energy at these heights. These appliances will supply data to a water pump, that will infuse or take out water to and from within special tanks that will be placed at the top of the pipelines (tanks that will be attached by a pipe of a small diameter to the ground). This will be done in order to add or reduce weight, thus determining the weighed force, which stretches the pipeline upwards, thus determining the pipeline's inclining angle, thus determining the exact height of the sail line, since there is constantly a horizontal force actives on the pipeline, by the wind's pressure on the sails. (The inclining can also be done with the aid of an additional sail, with an altering angle, which changes according to the energy-measured data - should it be clarified that it meets the requirements, and a wind, strong enough to incline the sail line should always be blown in its area). The sail line will be at a height, in which the wind's energy is maximal at that time.

(Maximal, to a certain extent of preciseness, in order not to activate the engine, which infuses the water too often, for the purpose of reaching changes in height due to negligible wind speed differences. All this will be determined by the directions that will be inserted to the computer, supervising the pump's action).

Note: the attachment between the sail line and the pipeline will be by axis that will enable a non steady angle between the sail line and the pipeline, in order to prevent a pressing force on the upper pipe of the pipeline. It is mostly advisable, that there will only be two, placed on the same imaginary line. It is clear, that these axises should be in a ring that could transfer the force, activated on it to all of the upper pipe's diameter.

It should also be noted, that the cooling of the electricity producing generators will be a simple matter, since the temperature in the height in which the jet streams blow is about -50° C and if the swift winds, bearing this temperature should be channeled into the generators, they will effectively cool the generators.

Calculation of the required sail movement speed

We will now prove, that the sail's velocity should be 1/3 than the wind's. The calculation of the sails' movement speed in the wind's direction, which will enable the highest possible power to be calculated by the formula as follows:

$$P = \frac{w}{t} = \frac{\vec{F} \cdot \vec{X}}{t} = \vec{F} \cdot \vec{v}_1$$

In which:

$P$ = power in Watts
$W$ = work in Joules
$t$ = time in seconds
$F$ = Pushing force in Newtons
$X$ = movement along which the force activates in the movement's direction, in meters (the directions are fixed, therefore there is no need to sum up the sections).
$v_1$ = the sails' speed in meter per second.

The force "$F$" will be calculated by the air's molecules' change of momentum at the hitting moment. At every second, a mass quantity $M,$ equal to $\rho(v-v_1)$ hits a m$^2$ of the sail (which is placed straight toward the wind). ($v$ - wind's speed in meter per second, $\rho$ - air's density in kg per m$^3$). The momentum of this mass quantity in the sail system is:

$$M(v - v_1) = \rho(v - v_1)^2$$

I assume that the collision is elastic, since that is the case at an excellent approximation. Therefore, the final momentum of this mass after the collision with the sail will be equal in size and opposite in direction to the initial momentum. Since the size $\rho(v-v_1)^2$ is the momentum, reaching at every second per m$^2$, the result is that at each second, the mass with this momentum receives a momentum in the opposite direction. Therefore, the momentum's difference that the sail causes to the air molecules in the sail system (and all the sails move at the same speed) is $2\rho(v-v_1)^2$. This is the size of the force being activated on a m$^2$ of the sail at every moment. The same force activates on the sail also in the earth's system. The sail's speed at that moment is $v_1$. Therefore, the power of the wind for each m$^2$ of the sail will be:

$$P = 2\rho(v - v_1)^2 v_1 \ .$$

We will seek for which $v_1$ this power is maximal:

$$\frac{\partial P}{\partial v_1} = 2\rho(v - v_1)^2 + 4\rho(v - v_1)(-1)v_1 = 0$$

The solution: $(v-v_1)(v-3v_1) = 0$

$$v_1 = \frac{v}{3}$$

The result is that in order to reach maximal power, the sail's speed should be a third of the wind's speed at that moment. We will find what this power's size is by placing it in the "$p$" formula:

$$P_{max} = 2\rho\left(\frac{2}{3}v\right)^2 \frac{v}{3} = \frac{8}{27}\rho v^3$$

We will examine which part it is of the wind's power:

$$P_{wind} = \frac{1}{2}mv^2 = \frac{1}{2}\rho v^3$$

$$\frac{P_{max}}{P_{wind}} = \frac{\frac{8}{27}\rho v^3}{\frac{1}{2}\rho v^3} = \frac{16}{27} = 0.59259 \approx 0.6$$

This is the known result regarding maximum wind energy useable, resulting from other calculations.

Now, there is need to calculate the wind's pressure on the sails, the amount of energy per m$^2$ of sail, produced by the wind, and to show the manner the device works. First we will calculate the air density at the height, proportional to its density on sea surface. Density is the number of molecules per volume unit times the average weight of a molecule or the number of mols per volume unit times the average weight of the mol. According to the Clausius Calpiron formula:

$$\frac{PV}{T} = nR$$

In the formula:

$n$ - the number of mols (we will take for the calculation *a* steady number).
$R$ - constant

Result : $\dfrac{P_1 V_1}{T_1} = \dfrac{P_2 V_2}{T_2} \Rightarrow \dfrac{V_1}{V_2} = \dfrac{P_2 T_1}{P_1 T_2}$

Index 1 - indicates sea surface height
Index 2 - at the great height

Result: $\dfrac{\rho_{2\,at\,great\,height}}{\rho_{1\,at\,sea\,surface\,height}} = \dfrac{mgN\dfrac{n}{V_2}}{mgN\dfrac{n}{V_1}} = \dfrac{V_1}{V_2} = \dfrac{P_2 T_1}{P_1 T_2} =$

$$= \frac{(200_{mb})(273°_K)}{(1033_{mb})(223°_K)} = 0.237$$

$\rho$- density
$m$- average molecule weight of the discussed gas
$N$- Avogadro number

**[0094]** This calculation is not really accurate, since m at the great height is not equal to m on sea surface height, because the constitutions of the gases at a great height is a little different, therefore both m's do not reduce. In order to be accurate, this calculation should be made for each of the gases: nitrogen, oxygen, argon, hydrogen, neon and helium - separately (also for carbon dioxide). But I do not posses a list of each kind of gases' percentage in 1 m$^3$ at a great height, therefore I will make another stricter, approximated calculation.

The volume composition of dry air on surface height is as listed in the following table in column 1. Accordingly, I have found $\rho_0$, marking which I've marked the partial weight in Kg of each of these gases in 1 m$^3$ of dry air on sea surface height in $0°_c$, according to the calculation of $\rho_o$ =(percentage in air) • (molecular weight) • $(1/22.443)m^3$. They are listed in column 2. Their sum is 1.2905419 Kg, a sum holding a confirmation from other sources too. In order to calculate the air density at great heights, we will assume that the nitrogen, adjacent to the surface height, does not float upon the heavier oxygen, because the horizontal winds and the obstacles on surface height, and the vertical wind too, cause a constant blending of the air. Therefore the volume percentages of these gases on surface height are determined only according to their percentage in the atmosphere. This is true also regarding argon, carbon dioxide and neon, they all posses a specific gravity not afar from one another. Krypton and xenon certainly do not float upon the other gases, since they are heavier, but their quantity can be negligible. Only hydrogen and helium float, as it seems, upon other gases and are rejected upwards, therefore, their concentration at heights is more intense than that at surface height. If we wish to find their concentration at heights - measurements should be made. But these two gases do not contribute much to the $m^3$ weight of air in the atmosphere, since they are relatively light. (But I shall also calculate the contribution of those two, according to their percentage on surface height - which certainly exists at heights).

We will find the $m^3$ air weight at heights according to the contribution of the common gases adjacent to the surface height. We will do this, regarding each gas separately, according to the formula: $\rho = \rho_o e^{-mgh/KT}$

In which $\rho_o$ has been calculated as above and $m, \rho, h, K, T$ are given in M.K.S. units.

$$\frac{mgh}{KT} = \frac{\left(m_{(a.m.u.)}\right)\left(1.66053 \cdot 10^{-27}_{(Kg)}\right)\left(9.8_{(m/s^2)}\right)\left(12000_{(m)}\right)}{1.38062 \cdot 10^{-23}_{(J/°K)}\left(223_{(°K)}\right)} = \left(m_{(a.m.u.)}\right) \cdot 0.063427125$$

Therefore the term $\rho_o e^{\frac{-mgh}{KT}}$ gives the results as shown in the next table, in column 3.

| Gas type | Column 1 | Column 2 ($\rho_o$, Kg) | Column 3 (Kg) |
|---|---|---|---|
| Nitrogen | 0.7803 | 0.9740625 | 0.1647618 |
| Oxygen | 0.2098 | 0.29914 | 0.0393007 |
| Argon | 0.0094 | 0.0167284 | 0.0013282 |
| Carbon dioxide | 0.0003 | 0.0005882 | 0.000036 |
| Hydrogen | 0.0001 | 0.0000089 | 0.0000078 |
| Neon | 0.0000123 | 0.000011 | 0.000003 |
| Helium | 0.000004 | 0.0000007 | 0.0000005 |
| Krypton | 0.0000005 | 0.0000018 | |
| Xenon | 0.00000006 | 0.0000003 | |

The sum of weights in column 3 is 0.205438 kg. The ratio between this weight and the air's weight on surface height is 0.1591874. Therefore, the air's density is at least 1/6.28 than that which is on surface height. (According to this calculation - in order to give the pipe from the pipeline the same lift force as for the pipe which is on surface height - as discussed above - we will have to make its thickness approximately 2.5 times less than the lower pipe's thickness. Therefore, if the lower pipe's thickness is 10 mm, then the upper pipe's thickness shall be 4 mm.

While calculating the wind's energy, we shall take the density as $\rho = 0.205$ kg/$m^3$ and while calculating the wind's pressure on the sails, we shall take a little larger value, $\rho=0.22$ kg/$m^3$ in order to be on the safe side.

We will now examine the wind's force on the sail.

The force on each $m^2$ is, as mentioned, $2\rho\left(v - v_1\right) = 2\rho\left(\frac{2}{3}v\right)^2 = \left(\frac{8}{9}\right)\rho v^2$ .

We shall calculate the pressure for the fastest jet steam existing in the world, which is in Japan: 550 Km/hour we will receive : pressure (force/$m^2$ sail)=

$$= (8/9)(0.22)v^2 = 0.196v^2 \Big|_{v=550\frac{Km}{hour}=153\frac{m}{sec}} = 0.196(153)^2 = 4588Kg$$

We will calculate the maximal force that the huge pipe of the pipeline can bear, for which we have calculated these calculations. (As mentioned, the pipes can be made with a much smaller diameter). Its diameter on surface height is 502 m and its thickness is 1 cm. The surface of its intersection is 315000 cm$^2$ (by 2$\pi$(502) (0.01)=10.04$\pi$=31.5 m$^2$).

If it is made of conventional steel, which can bear a tension of 3000 kg/cm$^2$, then the tension which the pipeline can bear, will be 945000 tons.

We shall assume, that the largest inclining angle we will allow the pipeline, due to the wind's pressure on the sails, will be 30°. (The pressure on the pipes can be negligible, should we build on them devices as mentioned above, in order to reduce wind's pressure on them) In this case, the wind's force on the sails (all together) could be (sin 30°) 945000 = (0.5)945000= 472500 tons. We have found above, that the maximal pressure at a maximal wind in Japan is 4588 kg/m$^2$. It is resulted, that for that, there is need in 472500/4.588 = 102986 m$^2$ of sails. Should we calculate regarding Europe, where the maximal wind speed is about 200 knots, which is about 370 km/hours we will receive:

$$Force\Big/\mathrm{m}^2 sail = 0.196v^2\ \Big|_{v=370\frac{Km}{hour}=103\frac{m}{sec}} = 0.196(103)^2 = 2079 Kg$$

Therefore, should we decide, that the maximal inclining in Europe during a maximal wind should be up to 30°, we will have to make the total surface of the sails at the size of 472500/2.073 = 227273 m$^2$.

If we allow an inclining of 45°, the maximal horizontal force on the sails will be (945000) (0.707) = 668216 ton, and that will require, at a wind speed of 550 km/hour, sails with a total surface of 145644 m$^2$, and at a wind speed of 370 km/hour - sails with a total surface of 321412 m$^2$. We will assume, that there is a need of a total sail surface of 500000 m$^2$, in order that it will be sufficient for weak winds too. Should we take the possibility, that at every moment there will be 25 working sails, each sail will have to be of a surface of 20000 m$^2$. Should we take the model of the pipeline, where the pipe's diameter on the surface height is 502 m and the upper pipe's diameter is (502)2.5 = 1225 m (in fact, it can be a little less, because if the lift force of 1 m$^3$ volume of pipe at the heights is 0.1907 kg, as will be shown, a diameter of 502 (2.2899)=1150 m shall be sufficient). And therefore, the sail's width can be 1300 m. According to this, each sail can be made at a height of less than 16m.

There are many possibilities for the number of sails working at each moment, for their width, and for their height - all this will be determined according to the most convenient matter.

We shall find the power, which the sails give during a maximal speed of wind's blowing for the values calculated above. The power will be calculated according to the above formula ( $\left(\frac{8}{27}\right)\rho v^3 A$ , where $A$ is the sail surface. At a wind speed of $550\frac{Km}{hour} = 153\frac{m}{sec}$ and a maximal inclining of 30°:

*P* of all the sails =

$$\left(\frac{8}{27}\right)(0.22)(153)^3(102986) = (2.4044)10^{10}_{watt} = 24.044\ \text{thousand} Mw$$

At a wind's speed of $370\frac{Km}{h} = 103\frac{m}{sec}$ and a maximal inclining of 30°:

*P* of all the sails=

$$\left(\frac{8}{27}\right)(0.22)(103)^3(227273) = 16.189\ \text{thousand} Mw\ .$$

For maximal inclining of 45°, in speed of 550 km/hour P of all sails=$(8/27)(0.22)(153)^3(145644)$=34,000Mw,

And in speed of 370 km/hour P of all sails = $(8/27)(0.22)(103)^3(321412)$ = 22.894 thousandMw .

But there is need to prepare also for situations in which there is a slower wind, and for such cases, there is need to make the sails with a larger surface, in order to receive all the possible energy from the wind (with the restriction of the determined inclining angle).

The force stretching the pipeline

We have found, that when the allowed inclining angle of the pipeline for the large diameter pipe is 30°, the allowed force on all the sails together is 472500 tons. In this case, the force stretching the pipeline upward, so that it will not incline at an angle larger than 30°, should be:

(cos 30°) (945000) = (0.866)(945000)=818394 Ton

When the allowed inclining angle of this line is 45°, the stretching force will have to be: (cos 45°)(945000)= 668216 Ton.

The air's density at the spoken height, 12000 m, is, as mentioned above, 0.205438 kg/m$^3$. The hydrogen's density in proportion to the air is as above about 1/14. Therefore, if we reduce the hydrogen's weight in the shells, which creates the lift force, we will get about 0.1907 kg/m$^3$.

It seems to me, that the best way to create the force that stretches the pipeline is to add several pipes, which we can call shell pipes, resembling the ones in the pipeline, which will be attached to the upper end of the construction, which is bearing the sail system and all that is related to the sail system. It is advisable, that this attachment too shall be made by two axises, both lying on the same imaginary line, just as the attachment binding this construction to the pipeline, only here, the pipes will have a round hard cap also on their lower side. In order to make it possible to sometimes lay the pipeline on the ground, or even to only reduce its height, thin flexible pipes will be attached to it. These thin pipes will reach the surface or a center that will be at some height and then through gas will be compressed to the shells - pipes when is needed, in order to make the pressure inside equal to the outer air pressure at the height where the shell pipes had lowered.

As to the stretching shell-pipes, there is a possibility to decide to make three shell-pipes. The length of each one of them will be 1000 m, and the diameter will be 1416 m. the thickness of the lower part of the lower shell-pipe's wall will be as the upper pipe's wall thickness of the pipeline (that according to my calculation is about 4 mm.). The thickness will reduce at heights according to the increase of its diameter, like the pipes in the pipeline. (therefore, the lower diameter will be 708 m and the upper diameter will be 739.375 m). Only the next pipe above it, will have a much thinner wall, according to the calculation of the remaining stretching force it has to transfer. The volume of the lower pipe of the three shell-pipes, including the volume of the upper cap and deducting the volume of the lower cap is about (1.7488484) 10$^9$ m$^3$, which activates a lift force at the size of 333505.4 tons. The pipe's weight, including the upper and lower cap, if we assume it is made of a compound substance that has a specific gravity of 1.65 cm$^3$/gr, is 40224.418 tons. The remainder is 293280.98 tons of lift force, which is about 36% of the required force for stretching the pipeline. It is obvious, that on these shells-pipes there will also be devices as mentioned above, for reducing the wind's force on them. The lower pipe shell can be made at the said diameter, but it can also be made at a larger diameter than the upper pipe of the pipeline. That is because the ring holding the axis, attaching the shell-pipe to the construction, can be made thick enough, so that it will be able to pass on the momentum, thus the force.

According to the stretching style of the pipeline shown here, the use of creating a lift force with the aid of a cone or a surface with a point mentioned above, will be only for the construction holding the sail system and the generator. The manner of building each sail, so that it can pass on the force, and so that there will always be a sufficient amount of m$^2$ of sail to receive all of the possible energy of the wind at the maximal inclining of the pipeline as determined will be: Each sail will be made of a frame, at a thickness determined by calculating, so that it will be sufficient to prevent the bending of the frame due to wind's pressure (these calculations are simple) and will be made of a suitable light and strong substance (aluminium, steel or a compound substance). It will also have, according to the need, strengthening poles. In the free - from - poles areas, thin cords will be stretched. These cords will create a net, with a not too rich density, which could hold the sail. The sail can be made from strong material. In order to prevent the pipeline from inclining at a non-advisable angle, when an unusually strong wind blows at the sail area, the computer, controlling the speed of the sails' movement, can be ordered at these cases, to move the sails at a higher speed. (Regularly, the sails move at a speed of $v_1 = v/3$). At a higher speed, the pressure on the sails will reduce and the pipeline will not pass the required inclining angle. But this method has a disadvantage. If we derive the original power formula by $v_1$, in order to know how P changes at the change of $v_1$, we will receive:

$$\frac{\partial P}{\partial v_1} = 2\rho(v - v_1)^2(v - 3v_1)$$

And if we derive the pressure formula (the force on m$^2$ sail) we will receive:

$$\frac{\partial}{\partial v_1}\left[2\rho\left(v-v_1\right)^2\right]=-4\rho\left(v-v_1\right)$$

The proportion between the capacity's derivative and the pressure's derivative is:

$$\frac{2\rho\left(v-v_1\right)\left(v-3v_1\right)}{-4\rho\left(v-v_1\right)}=\frac{v-3v_1}{-2}$$

We will examine for which $v_1$ this expression is larger than 1 :

$$\frac{v-3v_1}{-2}>1\Rightarrow 3v_1-v>2$$

It is resulted, that if the deviation from $v_1 = v/3$ is very small, so that the last formula exists - the reduction of pressure is larger than the reduction of produced energy. But if the deviation is beyond that -the loss of energy increases at an increasing rate more than the reduction of pressure on the sails.

There is need to examine if these cases are frequent enough, to make an effort to avoid them. If they are frequent enough - then it is possible to cause a constant, even reduction of pressure and of produced energy. This can be done, for instance, by folding some of the sails during the blowing of a strong wind, in a manner, described later, so that less $m^2$ of sail will work. The folding of the sails can be done like this: the sail material will be rolled on a cylinder, which will be on the sail's side, from where the wind is coming. The cylinder will move on a small device, composed of two wheels one behind the other, and the direction of its movement will be upward - downward or vice-versa. It will move with the aid of an electric engine. Its electricity will reach it, constantly, through the chains holding the sail, or from a battery, which will be filled, at some point along the track of the sail way. The wheels will move on the frame and will be attached to parallel wheels, which will be placed on the other side of the frame, and will cause the attachment of the small device to the frame, so it will not fall off. The other end of the sail material will be fixed to the frame. The movement of the cylinders in the consequent sails will be: on one sail, the movement will be upward-downward and on the other one, the movement will be the other way around (downward - upward). This - in order that the force on the upper working chain and on the lower working chain - will be more or less equal. The engines rolling the sail's materials will receive a wireless signal from the sensor, checking the pipeline's inclining. This sensor will also give the signal to stop the rolling when the inclining angle will be sufficient high. All the sails will fold together. Some will be working sails and some will be sails at a laying position. This is done, in order that in the continuance of the sails' movement, when the laying sails will work and the working will return to laying position, there will not be a change in the total wind force on the sails.

The amount of working $m^2$ in the sail line will constantly be in such a way, that the inclining of the pipeline will be at the allowed maximum, in order to receive as much power as possible. As mentioned before, the used power for each $m^2$ of sails is:

$$\frac{P}{m^2}=\frac{8}{27}\rho v^3$$

And the pressure on each $m^2$ of sail is: $\dfrac{F}{m^2}=\dfrac{8}{9}\rho v^2$

We will name the allowed force on all the sails together, so that the pipeline will maximally incline - $B$. Therefore, the number of the working $m^2$ is: $\dfrac{B}{\frac{8}{9}\rho v^3}$

Then, the total power is: $\dfrac{B(8/27)\rho v^3}{(8/9)\rho v^2}=B\left(\dfrac{1}{3}\right)v$

As a result, the power in watts, which the discussed device will produce, increases proportionally to *v*.

Note: the shells-pipes described above, which stretch the sail line, have been described as bearing thickness of 4 mm per pipe and 1 mm per cap. Should it become evident, that it is not worthwhile using a substance, that its stretching strength is over 30-kg/mm, there will be need to make the pipe approximately twice as thick (and accordingly also the pipeline's upper pipe's thickness and some of the ones under it). The thickness of the caps will have to be made 2.5 times than mentioned. This fact does not cause any problem, since the lift force is still much greater than the weight, because the lift force is larger in one order than the weight.

An additional description of the sail-line, and the manner of the device acting.

Since the sails are on the sail line one after the other - in order for the wind to reach all the sails and not only the first one, the sail line should move constantly, upward and downward. Movement of the pipeline at a small angle back and forth, will do this. (By compressing gas to the stretching shells-pipes and its extraction, or by burdening on the shells by means of additional water, that will be infused to a special tank above the pipeline, and then will be extracted. This can also be done by an additional sail, which will be located above the pipeline, but in such a way that will not interfere with the working sails. This sail's inclining angle will be supervised by a computer, and will cause on and off an additional horizontal force on the upper part of the device). The said movement solves the problem in the following manner: when the sail line, constantly at a horizontal line (it can be accomplished), reaches a certain new height -there will be flowing air in front of the first sail and in front of all the other sails too. This flowing air (which is the wind) presses every sail and pushes it. We will discuss two sequential sails. It is advisable, that when the air, which originally was at the third distance between the sail, at the front of the second sail, finishes reaching the back sail, the sail will already be at a new height, in which fresh wind will blow. (in this situation, there is a relative vacuum, behind the first sail, in a section with a length of 2/3 wind speed times the number of seconds that have passed since the initial state. It is possible, that this relative vacuum, should it increase, its influence, on the wind's weakening on the wind that should hit the back sail, will be too big).

It is possible to determine another measure than 1/3, should it become evident, that it is insufficient or on the contrary, a too strict requirement. In order to achieve such a requirement, the distance between the sequential sails should be equal to the maximal wind speed we wish to use, multiple three times the time it takes the sail line to rise to a height, equal to the sail height. If, for instance, the maximal wind's speed we wish to use is 540 km/hour, which is 150m/second and the height of the sail is 30 meter and it takes the sail line 15 seconds to rise, the distance between the sequential sails will be: (150) (15)3 = 6750 m.

Should there be 25 sails in the sail line, the length of the sail line will be 169 km. In principle, there is no restriction on the sail line length, since each section of the sail line will possess shells, which will leave it to be in the air. The only restrictions will be of production expenses and convenience of maintaining. Shortening of the line can be caused, if the pipeline's vibration frequency be increased, or if a less tough criteria than the one discussed herein (multiplication by 3) will be chosen.

In order that the sails will receive fresh wind - the sail line should be above the pipeline and under the height of the shells-pipes. This can be achieved by using long enough aerodynamic poles. These poles will emerge from the great bearing which is attached to the top of the pipeline. They will be long enough, so that the distance between the top of the pipeline and the bottom of the stretching shells-pipes will be at least three times than the sails' height. Note: in order to prevent bending of the aerodynamic poles, the construction bearing the sails and all that is connected to them should be attached to the aerodynamic poles by a joint, for instance, by a ring in which there is an axis or hinges, which will be attached to the construction and also the attachment from above, between the construction and the lower shell-pipe will be by a hinge that is found on a large ring. This ring is attached to another aerodynamic pole which is attached to the lower shell-pipe. In addition, in order that the sails that are returning after working to the front of the sail line will not disturb the fresh wind coming to the sail, it is advisable that the returning sails will do so from the side and not from below. It is also advisable, that the shells holding the sail line in the air, will be from both sides of the sail line and not from above or under. Therefore, all the working chains, which are moved by the sails and all that is related to them, will be at a state of 90° relative to the situation described above.

In conclusion: the essence of this patent request is the usage of the jet streams in order to produce electricity, by means of the pipeline, bearing itself by light gases, and which also stretches with the aid of light gases, and by sails moving in the wind's directions. (Or by fans, which have not been described here and which also get a certain speed, so the movement's throwing of each point on each wing toward the wind's movement will be a third of the wind's velocity. Therefore, the inclining of each wing at the section near the fan's axis is different than its inclining at more distant points, and in fact, for each distance from the axis, the points have a different inclining angle). All the other details, such as making the generators, which produce electricity at heights, (instead of sending one more pipe below in order that the turbines will be on the ground) the details of the sails and the frame in which they move, and the means of passing the force between the sails and the electricity producing generators - are all examples, and these details can be made in different manners. Another example, is the quick transfer of the wind's energy to electric energy and not another energy.

Table of radius values and the lower pipe's length for which the lift force on the pipe is larger than its weight

The weight of the pipe has been calculated as if it is made of steel.

| For the pipe, holding the gas in it | | For the pipe with a round and cone-shaped shell from all sides | |
| --- | --- | --- | --- |
| Radius in meters | Length in meters | Radius in meters | Length in meters |
| 165 | 529 | 1 | 81 |
| 166 | 443 | 6 | 106 |
| 167 | 382 | 11 | 131 |
| 168 | 337 | 16 | 136 |
| 169 | 311 | 21 | 141 |
| 170 | 273 | 26 | 146 |
| 171 | 249 | 31 | 151 |
| 172 | 230 | 36 | 156 |
| 173 | 213 | 41 | 161 |
| 174 | 199 | 46 | 156 |
| 175 | 187 | | |
| 176 | 177 | | |
| 177 | 177 | | |
| 178 | 178 | | |

Drawing No. 18 shows, a schematic outline of the assembly of the major device parts. (25 - the ground; 26 - chains holding the device, fastened into the ground; 27 - the body of one of the pipeline's pipe; 28 - the circular shell of the discussed pipe; 29 - opening for equalizing the air pressures with the outer air and for entrance of people for mending of the pipe above the shell; 31 - cables pulling the pipeline upwards, but enabling wind blowing in the direction of the sails; 32 - one of the styles of the part, stretching the line upward, in this case it is also a hydrogen filled pipe. There could be a number of stretching pipes such as this. 33 - a frame made of triangles, its intersection rectangular, in it are the sails, moving along it, the chains moving them, the generator moving the sails at a 1/3 of the wind's velocity and the generators producing the electricity; 34 - a bearing, which enables the sail line's frame to alter its direction according to the wind's direction without turning in an angle all the pipeline, 30 - a tank full of hydrogen, in order to give a lift force to the frame and to all that is in it. (Also, from both sides of the frame, in the direction of the reader and at the back direction, there will be similar hydrogen tanks). I did not draw, for clearance sake of the drawing, the device described in drawing No. 3, adjacent to part or to all of the pipes, in order to reduce the wind's pressure on the pipe, and the gauges inserted in each pipe for measuring the air's pressure in it.

**Claims**

1.  A device for producing electricity from jet streams comprising:

    at least one generator;
    a first part comprising a sail line disposed at heights where said jet streams flow and comprising sails upon which jet stream winds blow thereby moving said sails to collect the kinetic energy of the jet streams; and chains bearing said sails on a cyclic track, said chains thus being moved on the cyclical track by the sails, and the moving chains are in turn connected to the at least one generator whereby the at least one generator is operated and said kinetic energy of the jet streams is converted to electrical energy; and
    a second part,
    **characterized in that** the second part comprises a pipeline fixing the sail line to the ground, the pipeline including a plurality of pipe bodies (27) sequentially positioned above each other and attached one to the next, the pipe bodies (27) being filled with a quantity of lighter than air gas, gas mixture or vacuum to be buoyant; and
    said sail line is positioned at the top of the plurality of sequentially positioned pipe bodies (27).

2.  The device of claim 1, wherein the float buoyancy of each of the plurality of pipe bodies (27) is neutral according to the altitude of each of the plurality of pipe bodies (27).

3. The device of claim 1, wherein the pipe bodies (27) have a cone-like shape.

4. The device of claim 3, wherein the pipe bodies (27) broaden upwardly.

5. The device of claim 1, wherein the pipe bodies (27) comprise an upper shell extending into a successive module above.

6. The device of claim 1, wherein the pipe bodies (27) comprise a lower foldable gas impermeable shell.

7. The device of claim 1, wherein the pipe bodies (27) comprise lateral walls having a thickness such that the wall thickness of each pipe body (27) is smaller than the wall thickness of the pipe body (27) immediately below.

8. The device of claim 1, wherein the thickness of the lateral wall of the pipe bodies (27) decreases from the lower part of the pipe bodies (27) module to the upper part of the pipe bodies (27).

9. The device of claim 1, wherein the volume of each of the pipe bodies (27) is substantially inversely proportional to the ambient air density at the altitude of each of the pipe bodies (27).

10. The device of claim 1, wherein each of the pipe bodies (27) comprises a freely turning sail to reduce wind pressure on the pipeline.

11. The device of claim 1, wherein the pipeline has a height so that the device reaches a jet stream wind.


**Patentansprüche**

1. Vorrichtung zur Herstellung von Elektrizität aus Jetstreams umfassend:

   wenigstens einen Generator;
   einen ersten Teil umfassend eine Segellinie, angeordnet in Höhen, in denen diese Jetstreams strömen und umfassend Segel auf die Jetstream-Winde blasen und dabei diese Segel dazu bewegen, die kinetische Energie der Jetstreams aufzunehmen; und Ketten, die diese Segel auf einem zyklischen Pfad halten, wobei die Ketten so auf dem zyklischen Pfad durch die Segel bewegt werden und die sich bewegenden Ketten ihrerseits mit dem wenigstens einen Generator verbunden sind, wobei der wenigstens eine Generator betrieben wird und diese kinetische Energie der Jetstreams in elektrische Energie umgewandelt wird; und
   einen zweiten Teil,
   **dadurch gekennzeichnet, dass** der zweite Teil eine Pipeline umfasst, die die Segellinie auf dem Grund befestigt, wobei die Pipeline eine Mehrzahl von Rohrkörpern (27) umfasst, die sequentiell übereinander angeordnet sind und jeweils mit dem nächsten verbunden sind, wobei die Rohrkörper (27) mit einer Menge eines Gases oder einer Gasmischung gefüllt sind, das/die leichter als Luft ist, oder Vakuum enthalten, so dass sie Auftrieb aufweisen; und
   wobei diese Segellinie oberhalb der Mehrzahl sequentiell angeordneter Rohrkörper (27) angeordnet ist.

2. Vorrichtung nach Anspruch 1, bei der der Strömungsauftrieb jeder der Mehrzahl von Rohrkörpern (27) neutral ist entsprechend der Höhe jedes der Mehrzahl von Rohrkörpern (27).

3. Vorrichtung nach Anspruch 1, bei der die Rohrkörper (27) eine konusartige Form haben.

4. Vorrichtung nach Anspruch 3, bei der die Rohrkörper (27) nach oben hin breiter werden.

5. Vorrichtung nach Anspruch 1, bei der die Rohrkörper (27) eine obere Schale umfassen, die sich in das nachfolgende Modul darüber hinein erstreckt.

6. Vorrichtung nach Anspruch 1, bei der die Rohrkörper (27) eine untere faltbare gasundurchlässige Schale aufweisen.

7. Vorrichtung nach Anspruch 1, bei der die Rohrkörper (27) seitliche Wände umfassen, die eine derartige Dicke haben, dass die Wanddicke jedes Rohrkörpers (27) kleiner ist als die Wanddicke des Rohrkörpers (27) unmittelbar darunter.

8. Vorrichtung nach Anspruch 1, bei der die Dicke der seitlichen Wände der Rohrkörper (27) vom unteren Teil des Rohrkörper(27)-Moduls zum oberen Teil der Rohrkörper (27) abnimmt.

9. Vorrichtung nach Anspruch 1, bei der das Volumen jedes der Rohrkörper (27) im Wesentlichen indirekt proportional zur Dichte der Umgebungsluft in der Höhe jedes der Rohrkörpers (27) ist.

10. Vorrichtung nach Anspruch 1, bei der jeder der Rohrkörper (27) ein frei drehendes Segel umfasst, um den Winddruck auf die Pipeline zu reduzieren.

11. Vorrichtung nach Anspruch 1, bei der die Pipeline eine derartige Höhe hat, dass die Vorrichtung den Wind eines Jetstreams erreicht.

## Revendications

1. Dispositif de production d'électricité à partir de courants jets comprenant :

au moins une génératrice ;
une première partie comprenant une ligne de voiles disposée à des hauteurs où lesdits courants jets s'écoulent et comprenant des voiles sur lesquelles les vents de courants-jets soufflent, déplaçant ainsi lesdites voiles pour collecter l'énergie cinétique des courants-jets ; et des chaînes portant lesdites voiles sur un trajet cyclique, lesdites chaînes étant ainsi déplacées sur le trajet cyclique par les voiles, et les chaînes en mouvement sont à leur tour reliées à au moins une génératrice, ce par quoi l'au moins une génératrice est amenée à fonctionner et ladite énergie cinétique des courants-jets est convertie en une énergie électrique ; et
une seconde partie,
**caractérisé par le fait que** la seconde partie comprend un pipeline fixant la ligne de voiles au sol, le pipeline comprenant une pluralité de corps de tuyau (27) positionnés de manière séquentielle les uns au-dessus des autres et attachés chacun au suivant, les corps de tuyau (27) étant remplis d'une quantité de gaz plus léger que l'air, de mélange de gaz ou de vide pour être flottants ; et
ladite ligne de voiles est positionnée au sommet de la pluralité de corps de tuyau (27) positionnés de manière séquentielle.

2. Dispositif selon la revendication 1, dans lequel la flottabilité de chacun de la pluralité de corps de tuyau (27) est neutre selon l'altitude de chacun de la pluralité de corps de tuyau (27).

3. Dispositif selon la revendication 1, dans lequel les corps de tuyau (27) ont une forme de type cône.

4. Dispositif selon la revendication 3, dans lequel les corps de tuyau (27) s'élargissent vers le haut.

5. Dispositif selon la revendication 1, dans lequel les corps de tuyau (27) comprennent une enveloppe supérieure s'étendant dans un module successif au-dessus.

6. Dispositif selon la revendication 1, dans lequel les corps de tuyau (27) comprennent une enveloppe inférieure pliable imperméable aux gaz.

7. Dispositif selon la revendication 1, dans lequel les corps de tuyau (27) comprennent des parois latérales ayant une épaisseur telle que l'épaisseur de paroi de chaque corps de tuyau (27) est inférieure à l'épaisseur de paroi du corps de tuyau (27) immédiatement au-dessous.

8. Dispositif selon la revendication 1, dans lequel l'épaisseur de la paroi latérale des corps de tuyau (27) diminue de la partie inférieure du module des corps de tuyau (27) à la partie supérieure des corps de tuyau (27).

9. Dispositif selon la revendication 1, dans lequel le volume de chacun des corps de tuyau (27) est sensiblement inversement proportionnel à la densité de l'air ambiant à l'altitude de chacun des corps de tuyau (27).

10. Dispositif selon la revendication 1, dans lequel chacun des corps de tuyau (27) comprend une voile tournant librement pour réduire la pression du vent sur le pipeline.

11. Dispositif selon la revendication 1, dans lequel le pipeline a une hauteur de telle sorte que le dispositif atteint un vent de courant-jet.

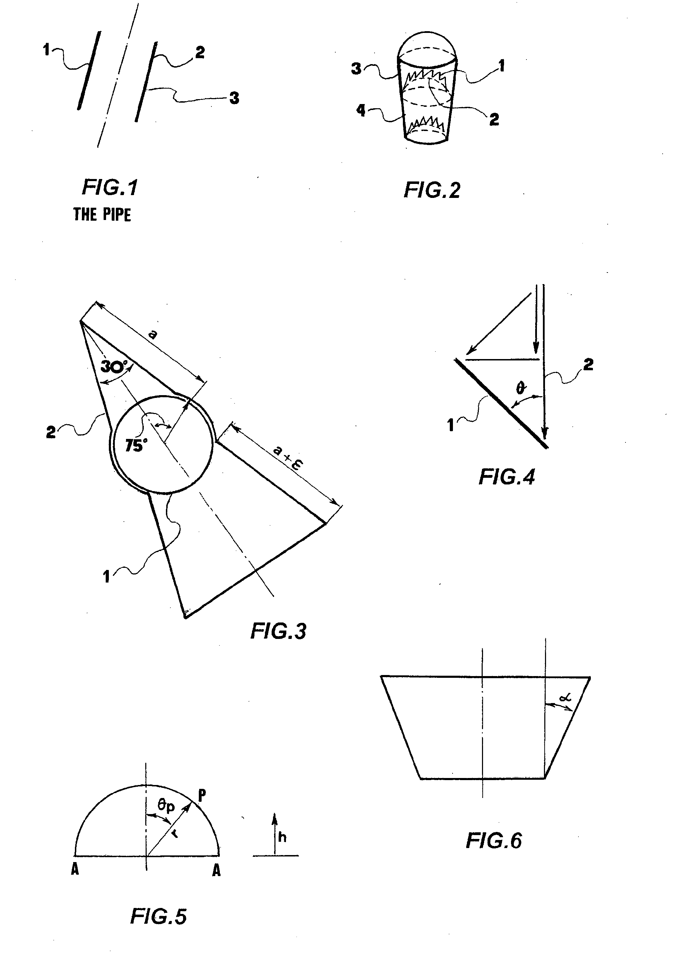

FIG.1

THE PIPE

FIG.2

FIG.3

FIG.4

FIG.5

FIG.6

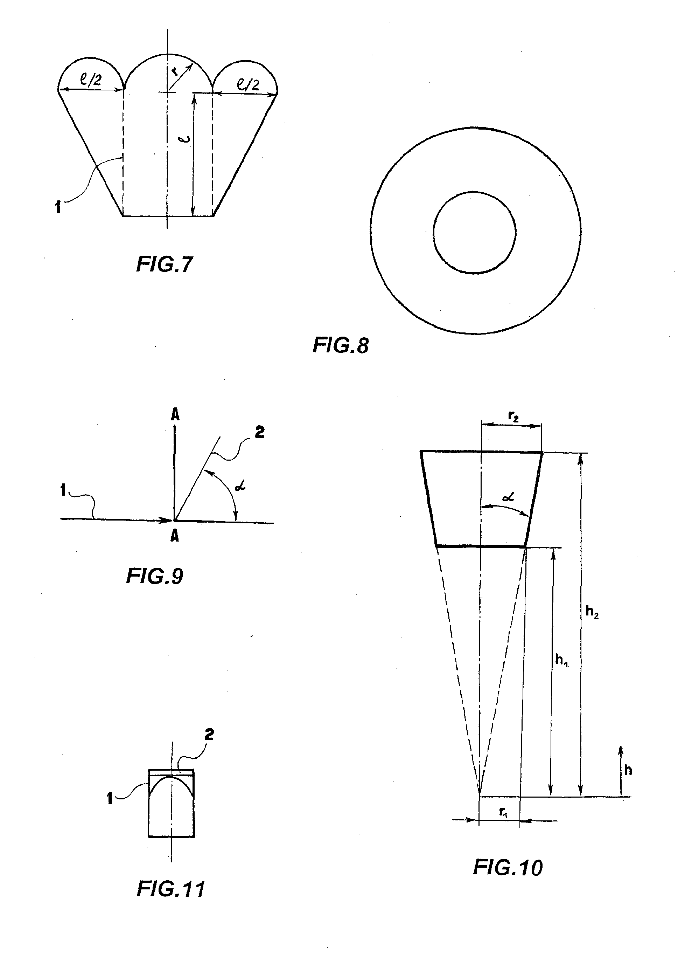

**FIG.7**

**FIG.8**

**FIG.9**

**FIG.11**

**FIG.10**

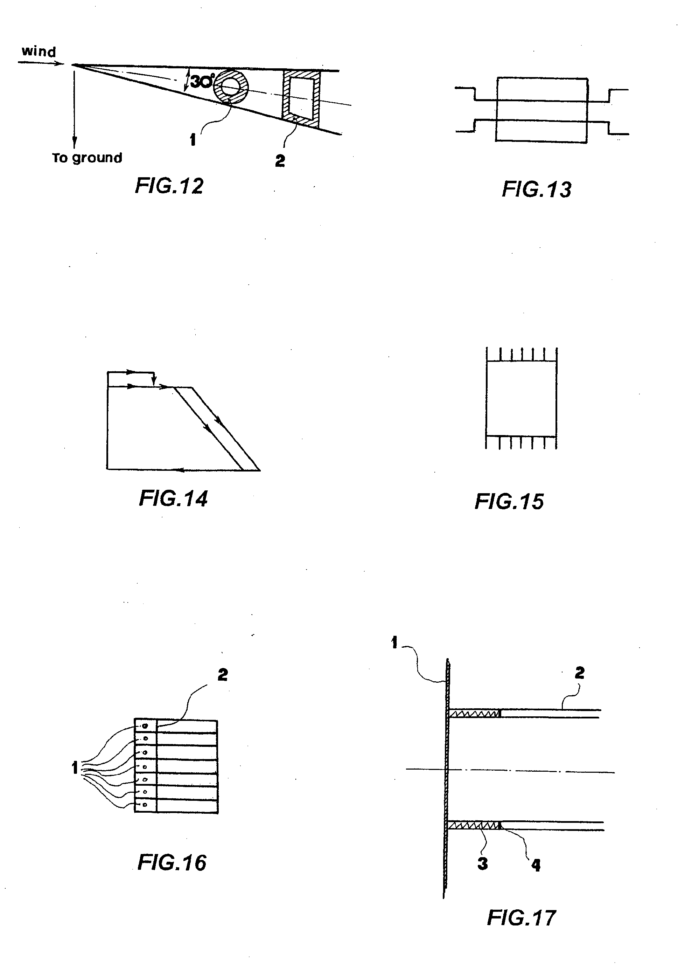

FIG.12

FIG.13

FIG.14

FIG.15

FIG.16

FIG.17

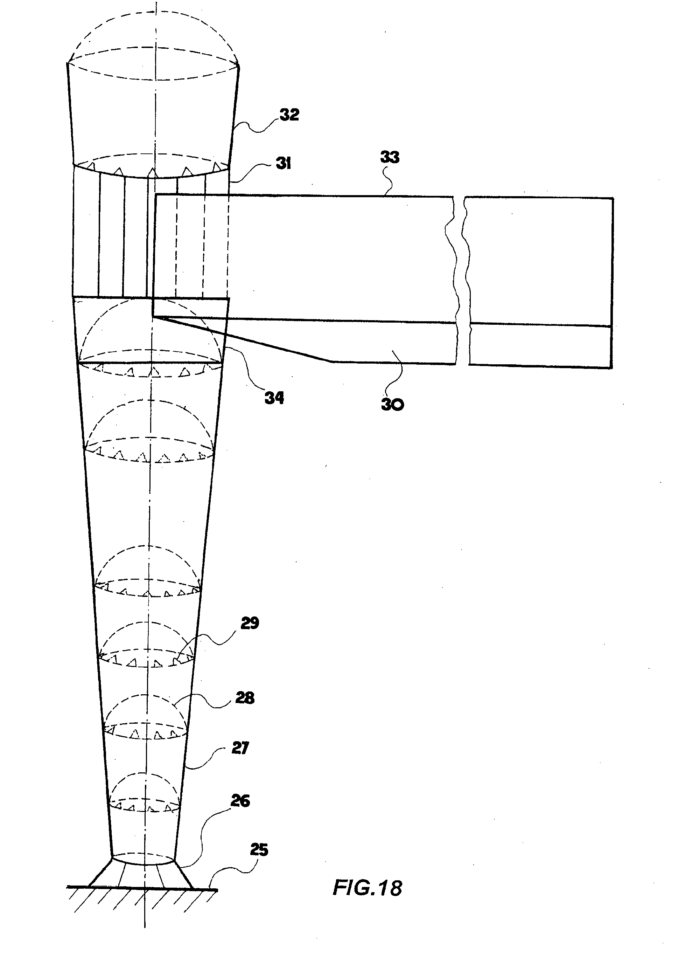

**FIG.18**

**EP 1 731 759 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003066934 A, Bolonkin
- US 4470563 A, Engelman
- US 3426214 O, O'Malley
- US 3924827 A, Lois
- US 4073516 A, Kling
- US 4084102 A
- US 4165468 A, Fry
- US 4450364 A, Benoit
- US 4166596 A, Mouton Jr.
- US 4309006 A, Biscomb
- US 4486669 A, Pugh
- US 4572962 A
- US 4659940 A, Shepard
- US 4708592 A, Krolick
- US 5152458 A, McConanchy
- US 6057606 A, Porat
- US 6474595 B, Herman
- US 6523781 B, Ragner
- US 6555931 B, Mizzi
- US 6781254 B, Roberts
- US 7183663 B, Roberts
- US 7275719 B, Olson
- GB 489139 A, van Gries
- US 3248735 A, Bartolini
- US 3620486 A, Charpentier
- JP 04350369 B, Taga Kiichi
- CN 2040167, Haiquan Zhang